# EUROPÄISCHE PATENTSCHRIFT

(11) **EP 1 658 216 B1**
(45) Veröffentlichungstag und Bekanntmachung des Hinweises auf die Patenterteilung: **23.07.2008**
(21) Anmeldenummer: 04766494.1
(22) Anmeldetag: 13.08.2004
(51) Int. Cl.: B62D 15/02

(54) **VORRICHTUNG ZUR SEMIAUTONOMEN UNTERSTÜTZUNG DES EINPARKVORGANGS BEI FAHRZEUGEN**
DEVICE FOR THE SEMI-AUTONOMOUS PARKING ASSISTANCE IN VEHICLES
SYSTEME D'AIDE AU STATIONNEMENT SEMI-AUTONOME DESTINE A DES VEHICULES

(30) Priorität: 18.08.2003 DE 10337842
(43) Veröffentlichungstag der Anmeldung: 24.05.2006
(73) Patentinhaber: ROBERT BOSCH GMBH, 70442 Stuttgart (DE)
(72) Erfinder: DANZ, Christian, 70469 Stuttgart (DE); LEE, Wei-Chia, 71229 Leonberg (DE)
(86) Internationale Anmeldenummer: PCT/EP2004/051791
(87) Internationale Veröffentlichungsnummer: WO 2005/019013

(56) Entgegenhaltungen:
- EP-A- 0 970 875
- DE-A- 10 117 650

## Beschreibung

Die Erfindung betrifft eine Vorrichtung zur semiautonomen Unterstützung des Einparkvorgangs bei Fahrzeugen nach dem Oberbegriff des Anspruchs 1.

### Stand der Technik

Die zunehmende Verkehrsdichte und verstärkte Bebauung freier Flächen engen den Verkehrsraum, insbesondere in Ballungszentren kontinuierlich ein. Der zur Verfügung stehende Parkraum wird enger und die Suche nach einer geeigneten Parklücke belastet den Fahrer zusätzlich zum immer dichter werdenden Verkehr. Hier kann zunächst die Funktion einer Parklückenvermessung dem Fahrer bei der Suche nach einer ausreichend großen Parklücke helfen. Anschließend kann ein semiautonomer Einparkassistent das zügige Einfahren in eine Parklücke unterstützen. Somit werden lange und/oder erfolglose Parkvorgänge vermeidbar.

Ein semiautonomes Einparksystem berechnet, nachdem eine passende Parklücke gefunden wurde, in Abhängigkeit von der Länge der Parklücke eine geeignete, ggf. bestmögliche Einfahrbahn, im Folgenden auch mit Einfahr- oder Solltrajektorie bezeichnet. Mittels eines geeigneten Kommunikationssystems, einem sogenannten HMI (Human Machine Interface), kann dem Fahrer die Information z.B. optisch, akustisch oder haptisch übermittelt werden, wie er zu lenken und Gas zu geben bzw. zu bremsen hat, um entsprechend der geeigneten Einfahrbahn in die Parklücke hinein zu fahren.

Bei einem semiautonomen Einparkassistent besteht jedoch prinzipiell das Problem, dem Fahrer die nötigen Fahrinformationen, wie Lenkeinschlag, Gasgeben oder Bremsen in einer Weise mitzuteilen, dass dieser nicht überfordert wird.

Aus der US 5,742,141 ist ein semiautonomes Einparksystem bekannt, bei welchem die aktuelle Position und eine gewünschte Einfahrtrajektorie sowie die Differenz der aktuellen Position zur Solltrajektorie ermittelt wird. Dabei variiert das Einparksystem die Servolenkung-Unterstützung in einer Weise, dass der erforderliche Lenkaufwand zunimmt, wenn die tatsächliche Position von der Wunschtrajektorie abweicht und abnimmt, wenn das Fahrzeug der Wunschtrajektorie folgt. Auf diese Weise wird der Fahrzeuglenker durch den Lenkaufwand eher dazu veranlasst, der Solleinfahrbahn zu folgen. Eine nachlassende Lenkunterstützung kann vom Fahrzeuglenker jedoch auch als verwirrend empfunden werden.

Im Weiteren sind Einparksysteme bekannt, bei welchen das Fahrzeug vollautomatisch ohne weitere Beteiligung des Fahrzeuglenkers in die Parklücke geführt wird.

Aus der DE 101 17 650 A1 ist eine gattungsgemäße Vorrichtung zum Verbringen eines Kraftfahrzeugs in eine Zielposition bekannt, wobei das Kraftfahrzeug ausgehend von einer Startposition nach einer fahrerseitigen Aktivierung die Umgebung des Kraftfahrzeugs abtastet und eine Steuerinformation für das fahrerunabhängige Verbringen des Fahrzeugs in die Zielposition ermittelt. Nach einer zweiten fahrerseitigen Aktivierung werden von den Steuerinformationen abhängige Steuerbefehle abgegeben, wodurch das Fahrzeug fahrerunabhängig vollkommen selbständig in die Zielposition fährt. Der Fahrzeugführer verfügt gemäß einer optionalen Ausbildung über eine Kontrollfunktion, mit der bei Gefahr, falls Personen oder Tiere in die vorgesehen Parklücke hineinlaufen, der selbsttätig ablaufende Parkvorgang sofort unterbrochen werden kann.

### Aufgabe und Vorteile der Erfindung

Der Erfindung liegt die Aufgabe zugrunde, eine Vorrichtung zur semiautonomen Unterstützung des Einparkvorgangs bei Fahrzeugen bereitzustellen, bei welcher der Fahrer beim Hinführen zu einer Solltrajektorie bzw. in dessen Bereich im Vergleich zum Stand der Technik weniger das Gefühl einer unerwünschten, gegebenenfalls störenden Einflussnahme hat.

Diese Aufgabe wird durch die Merkmale des Anspruchs 1 gelöst.

In den Unteransprüchen sind vorteilhafte und zweckmäßige

Weiterbildungen der Erfindung angegeben.

Die Erfindung geht zunächst von einer Vorrichtung zur semiautonomen Unterstützung des Einparkvorgangs bei Fahrzeugen aus, die eine Einheit zur Ermittlung einer geeigneten Einparkbahn und Mittel zur Bestimmung der aktuellen Position des Fahrzeugs sowie eine Kommunikationseinrichtung umfasst, mittels der einem Fahrzeuglenker in Abhängigkeit von der aktuellen Position des Fahrzeugs in Bezug auf die ermittelte geeignete Einparkbahn Fahranweisungen, wie insbesondere erforderliche Lenkbewegungen mitteilbar sind.

Erfindungsgemäß sind ausgehend von der Vorrichtung zur semiautonomen Unterstützung des Einparkvorgangs bei Fahrzeugen, die eine Einheit zur Ermittlung einer geeigneten Einparkbahn und Mittel zur Bestimmung der aktuellen Position des Fahrzeugs sowie eine Kommunikationseinrichtung umfasst, mittels der einem Fahrzeuglenker in Abhängigkeit von der aktuellen Position des Fahrzeugs in Bezug auf die ermittelte geeignete Einparkbahn Fahranweisungen mitteilbar sind, Mittel zur Regulierung der Fahrgeschwindigkeit sowie eine Steuereinheit zur Kontrolle der Regulierungsmittel vorgesehen. Dabei ist die Steuereinheit dazu ausgelegt, mit Hilfe der Regulierungsmittel die Fahrzeuggeschwindigkeit zu begrenzen, herabzusetzen bzw. das Fahrzeug ganz zu stoppen, wenn die aktuelle Position des Fahrzeugs in einem vorgegebenen Ausmaß von der geeigneten Einparkbahn abweicht und eine erneute Geschwindigkeitserhöhung zuzulassen, wenn das Lenkrad in eine Position gebracht wird, die zur geeigneten Einparkbahn bzw. in einen vorgegebenen Wertebereich um die geeignete Einparkbahn zurückführt. Durch diese Vorgehensweise, die auch mit der oben ausgeführten Lösung mit Servomitteln für die Lenkung kombiniert werden kann, wird es möglich, dem Fahrer beim Einparkvorgang in eine Parklücke den Lenkvorgang, das Gasgeben und Bremsen zu überlassen und ihn dennoch auf der berechneten Einparktrajektorie bzw. in einem Toleranzbereich um die Einparktrajektorie in die Parklücke einfahren zu lassen. Dies liegt daran, dass durch das Begrenzen oder Herabsetzen der Fahrzeuggeschwindigkeit bzw. völlige Stoppen des Fahrzeugs in einer Fehlposition der Fahrer sozusagen intuitiv dazu hingeführt wird, das Fahrzeug auf der gewünschten Einparktrajekorie bzw. in einem Bereich um diese Trajektorie zu halten. Denn der Fahrzeuglenker spürt ein Abweichen von vorgegebenen Werten ohne eine optische oder akustische Information, die selbstverständlich auch zusätzlich noch erfolgen kann durch das geänderte Fahrverhalten des Fahrzeugs.

Die Begrenzung oder Herabsetzung der Fahrzeuggeschwindigkeit kann durch eine Einrichtung zur Betätigung der Bremsen und/oder durch eine Einrichtung zur Drosselung der Motorleistung, z.B. durch Drosselung des Gases erfolgen.

Die beschriebenen Vorrichtungen zur semiautonomen Unterstützung des Einparkvorgangs haben gegenüber vollautomatischen Einparksystemen den Vorteil, dass der Fahrer weitgehend selbstbestimmt das Lenken und Gasgeben übernimmt, das Fahrzeug aber dennoch einer gewünschten Bahn folgt. Im Gegensatz zu bekannten semiautonomen Systemen liegt der Vorteil darin, dass der Fahrzeuglenker nicht durch überfrachtete Anweisungen des Systems überfordert wird, sondern vielmehr eine sanfte fast unmerklich, intuitive Führung erhält, die aber ein zuverlässiges Einfahren auf der gewünschten Bahn bzw. in einem Toleranzbereich um die Einfahrbahn erlaubt. Dabei sind die beschriebenen Vorrichtungen vergleichsweise kostengünstig, insbesondere im Vergleich zu vollautomatischen Systemen.

Die Bremsfunktion bzw. die Drosselung des Gaspedals sollte vom Fahrer überstimmbar sein, z.B. durch Abschalten per Schalter oder durch stärkeres Gasgeben, um insbesondere auf Zwangs- bzw. Notsituationen reagieren zu können.

### Zeichnungen

Mehrere Ausführungsbeispiele der Erfindung sind in den Zeichnungen unter Angabe weiterer Vorteile und Einzelheiten im Folgenden näher erläutert. Es zeigen
- Figur 1a: ein Blockdiagramm eines Regelkreises für ein semiautonomes Einparksystem mit aktiver Lenkung,
- Figur 1b: die Funktionsverläufe des Lenkwinkels über dem Weg auf der Einfahrbahn für eine Solltrajektorie, die vom Fahrer vorgenommene Lenkwinkeleinstellung sowie eine überlagerte automatische Korrekturlenkung,
- Figur 2: die Darstellung einer Solltrajektorie mit Toleranzband und tatsächlich gefahrener Trajektorie zur Veranschaulichung der Wirkungsweise eines semiautonomen Einparksystems mit Regulierungsmittel für die Fahrzeuggeschwindigkeit und
- Figur 3a bis 3j: einen schematisch dargestellten Einparkvorgang mit angedeuteten Erfassungsbereichen der Abstandsensoren in einer Draufsicht.

### Beschreibung der Ausführungsbeispiele

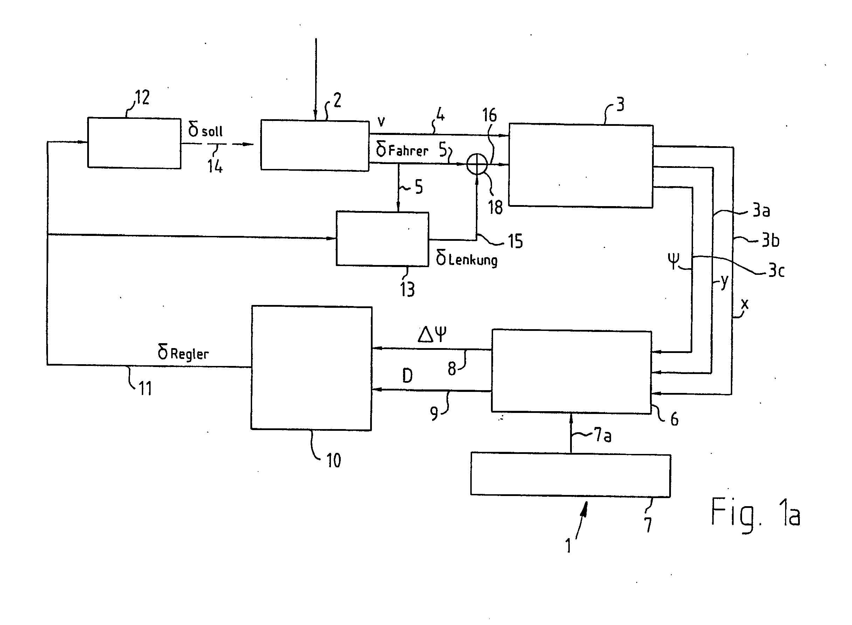

In Figur 1a ist ein Regelkreis 1 für ein semiautonomes Einparksystem mit aktiver Lenkung dargestellt. Das Rechteck 2 symbolisiert den Fahrer, das Rechteck 3 das Fahrzeug. Der Fahrer kann durch den Pfeil 4 und den verzweigten Pfeil 5 verdeutlicht die Geschwindigkeit v und den Lenkwinkel Δ_{Fahrer} vorgeben. Die Pfeile 3a und 3b vom Rechteck 3 zu einem Rechteck 6 stehen für die Fahrzeugposition x und y, der Pfeil 3c für den Gierwinkel Δ des Fahrzeugs. Das Rechteck 6 symbolisiert eine Einheit, die aus Daten für eine Solltrajektorie (Rechteck 7 mit Pfeil 7a) der Fahrzeugposition xy sowie dem Gierwinkel Δ Differenzsignale ΔΔ und d (Pfeile 8 und 9) erzeugt, die zum Regler 10 geführt werden. ΔΔ ist die Gierwinkeldifferenz, d ist der Abstand zur Solltrajektorie.
Der Regler 10 gibt bei dieser Eingabe einen Lenkwinkel Δ_{Regler} aus (verzweigter Pfeil 11), der an ein HMI (steht für Human-Machine-Interface, also eine Kommunikationseinrichtung), (Rechteck 12) sowie an eine aktive Lenkung (Rechteck 13) geführt wird. Mit der Kommunikationseinrichtung 12 wird dem Fahrer der Solllenkwinkel Δ_{Soll} z.B. optisch, akustisch oder haptisch mitgeteilt (siehe gestrichelter Pfeil 14 zum Rechteck 2). Der vom Fahrer eingestellte Lenkwinkel Δ_{Fahrer} (siehe verzweigter Pfeil 5) wird an die aktive Lenkung 13 und einen Summationspunkt 18 weitergegeben. Die aktive Lenkung 13 gibt gegebenenfalls einen Lenkwinkel Δ_{Lenkung} (siehe Pfeil 15) aus, dem am Summationspunkt 18 der Lenkwinkel Δ_{Fahrer} des Fahrers überlagert wird. Das Summensignal aus Δ_{Fahrer} und Δ_{Lenkung} (Pfeil 16) führt zum tatsächlichen Gierwinkel Δ des Fahrzeugs.

Wie bereits oben ausgeführt, hat diese Art der semiautonomen Einparkhilfe den Vorteil, dass der Fahrer den Einparkvorgang weitgehend selbst kontrollieren kann, aber dennoch ein ruhiges Einfahren zustande kommt.

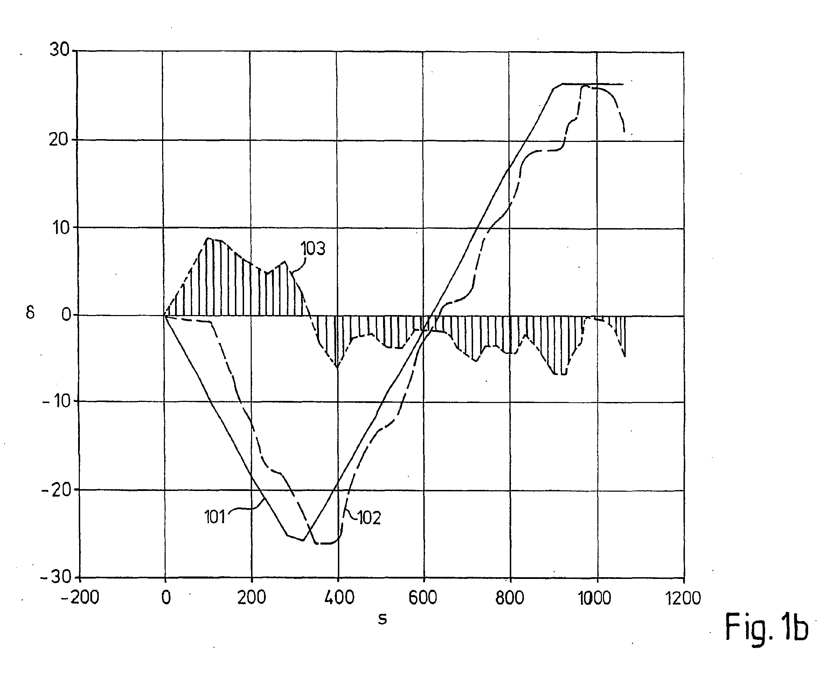

In Figur 1b sind in drei Kurvenverläufen 101, 102 sowie 103 der jeweilige Lenkwinkel über dem Weg für einen Einparkvorgang in eine Parklücke abgebildet. Der Kurvenverlauf 101 stellt den Solllenkwinkel δₛₒₗₗ in Grad über dem Weg s (in zufälligen Einheiten) bei einem Einparkvorgang dar. Der Kurvenverlauf 102 spiegelt den vom Fahrer eingestellten Lenkwinkel δ_{Fahrer} über dem Weg s wider. Aufgrund einer Abweichung des Verlaufs des vom Fahrer eingestellten Lenkwinkels δ_{Fahrer} zum Solllenkwinkel δₛₒₗₗ wird die "aktive Lenkung" durch Einstellen eines Korrekturlenkwinkels δ_{Lenkung} wirksam und korrigiert entsprechend dem Kurvenverlauf 103 den vom Fahrer eingestellten Lenkwinkel, so dass sich der Solllenkwinkelverlauf 101 ergibt. Der Eingriff der "aktiven Lenkung" bewegt sich in einem vergleichsweise kleinen Winkelbereich von hier beispielhaft ± 10°.

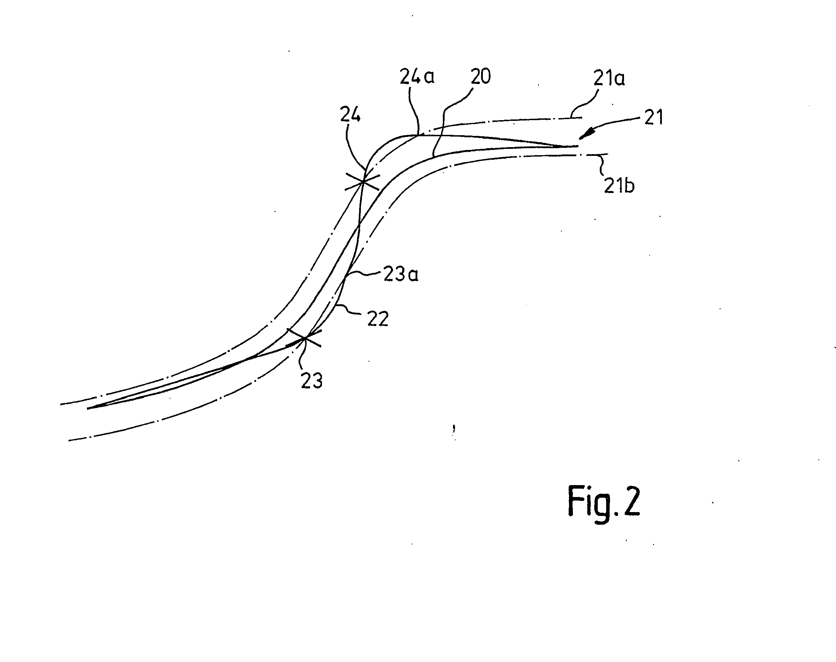

In Figur 2 ist eine Solltrajektorie 20 dargestellt sowie ein dazugehöriger Toleranzschlauch 21 mit Begrenzungsrändern 21a und 21b. Zusätzlich ist die von einem Fahrer tatsächlich gefahrene Trajektorie 22 abgebildet. Man sieht, dass diese Trajektorie an den Stellen 23 und 24 den Toleranzschlauch 21 verlässt, jedoch nach den Stellen 23a und 24b auch wieder in den Toleranzschlauch 21 zurückkehrt.

Ein solches Lenkverhalten ergibt sich für ein semiautonomes Einparksystem, bei welchem das Fahrzeug bei Übertreten des Toleranzschlauchs 21 so lange automatisch auf seiner Geschwindigkeit begrenzt bzw. abgebremst wird, bis der Fahrer den Lenkwinkel derart anpasst, dass er wieder auf die vorberechnete Solltrajektorie 20 zurück gelangen kann. Das heißt, an den Stellen 23 und 24 wird dem Fahrer z.B. durch Abbremsen des Fahrzeugs signalisiert, dass er den Lenkwinkel ändern muss, um die gewünschte Einfahrbahn verfolgen zu können.

Zusätzlich zu einer Rückkopplung an den Fahrer durch das veränderte Fahrverhalten des Fahrzeugs kann dem Fahrer selbstverständlich auch optisch dargestellt werden, dass er den Lenkwinkel ändern und insbesondere wie er den Lenkwinkel ändern sollte.

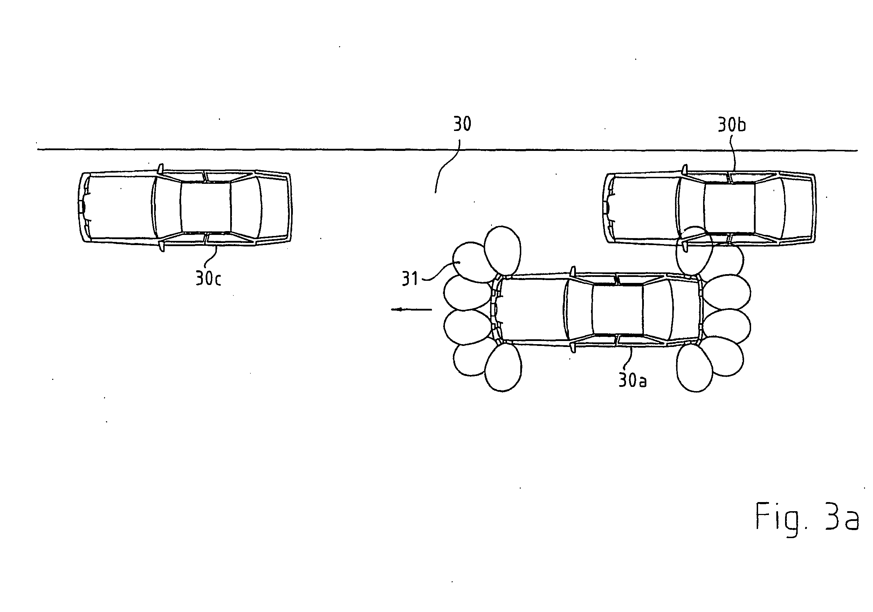

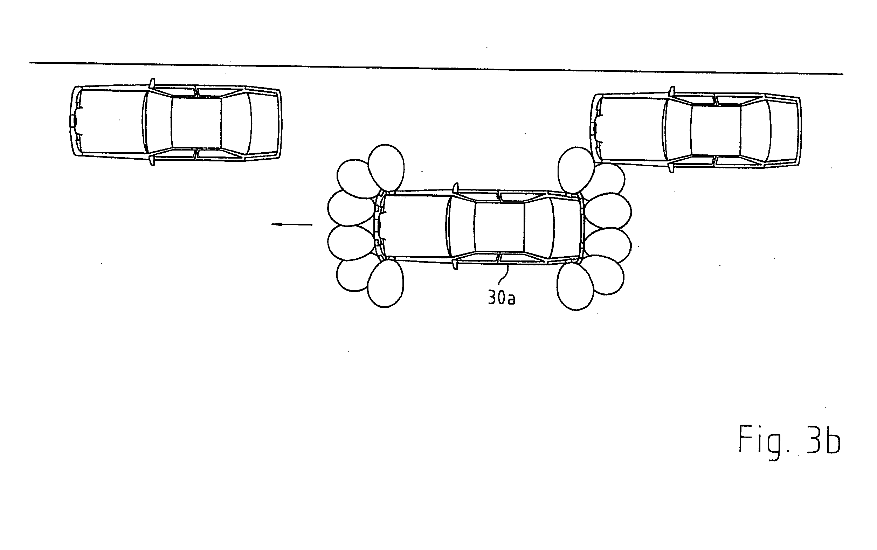

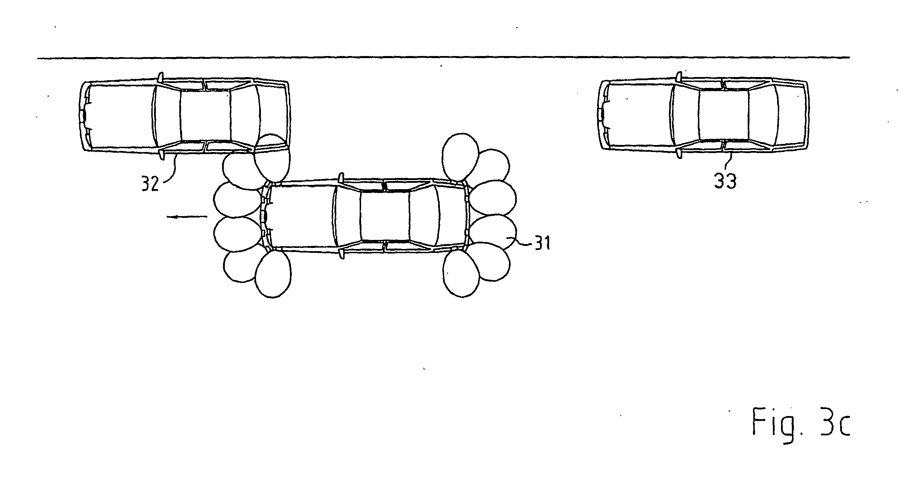

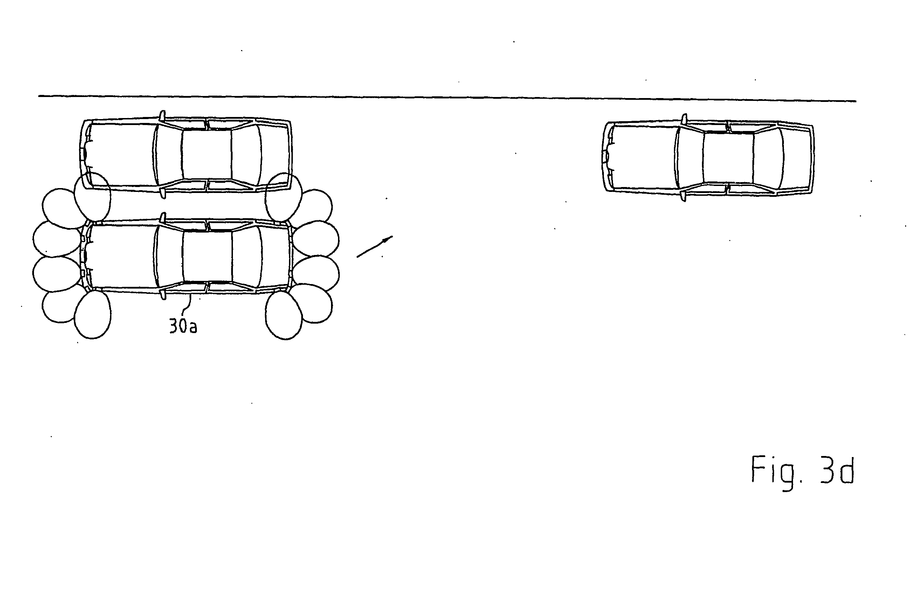

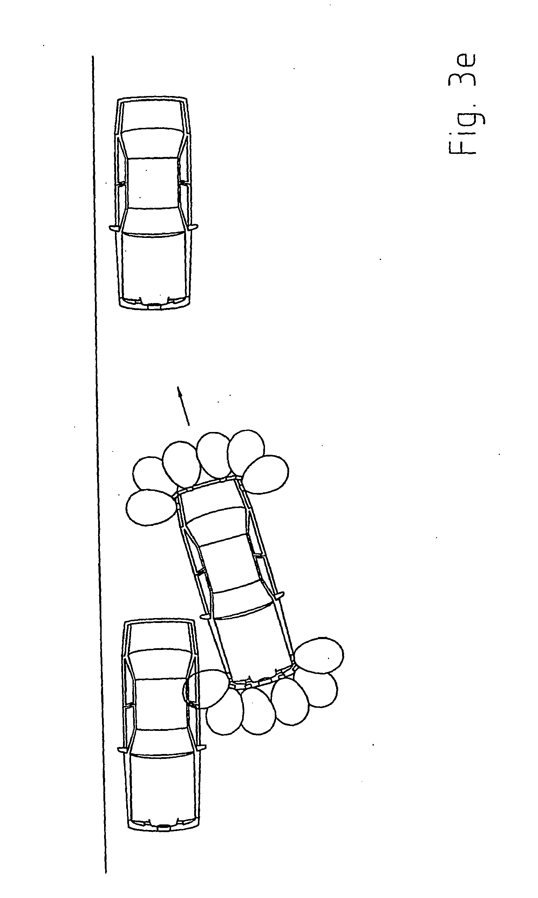

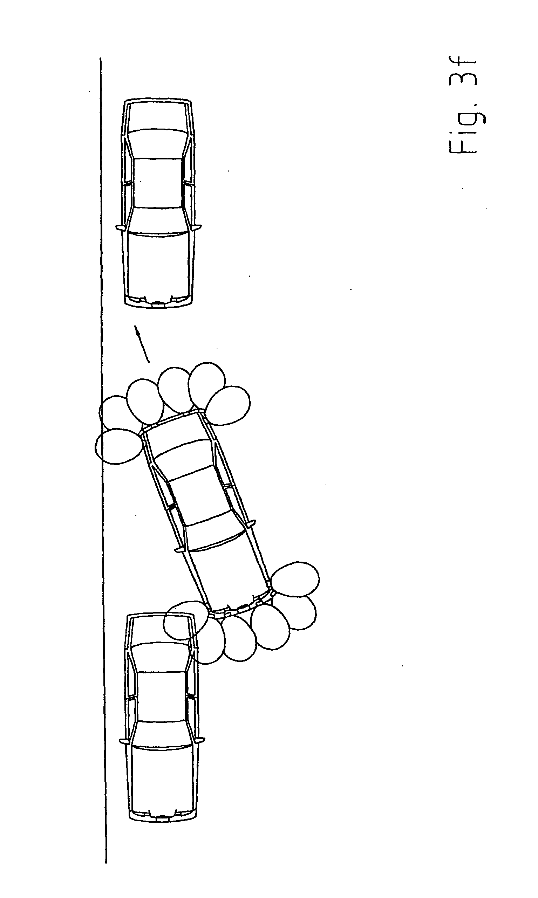

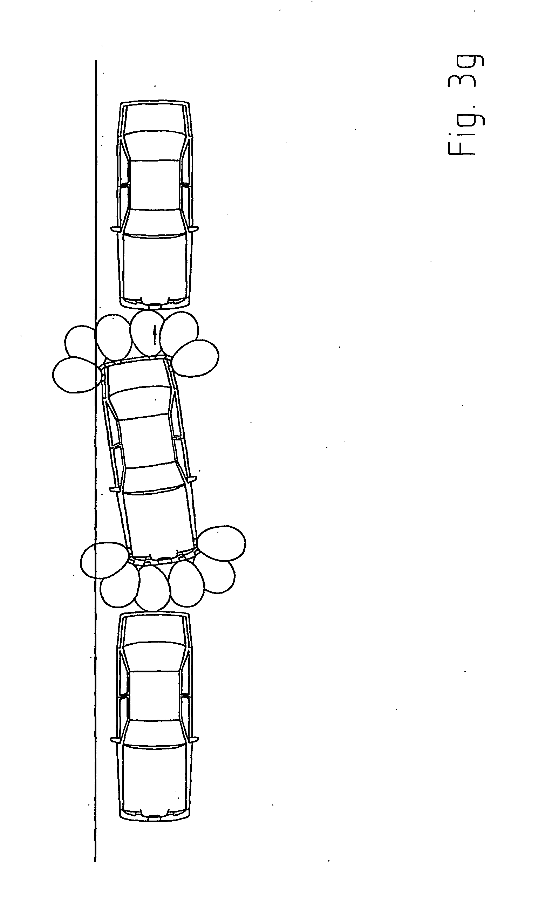

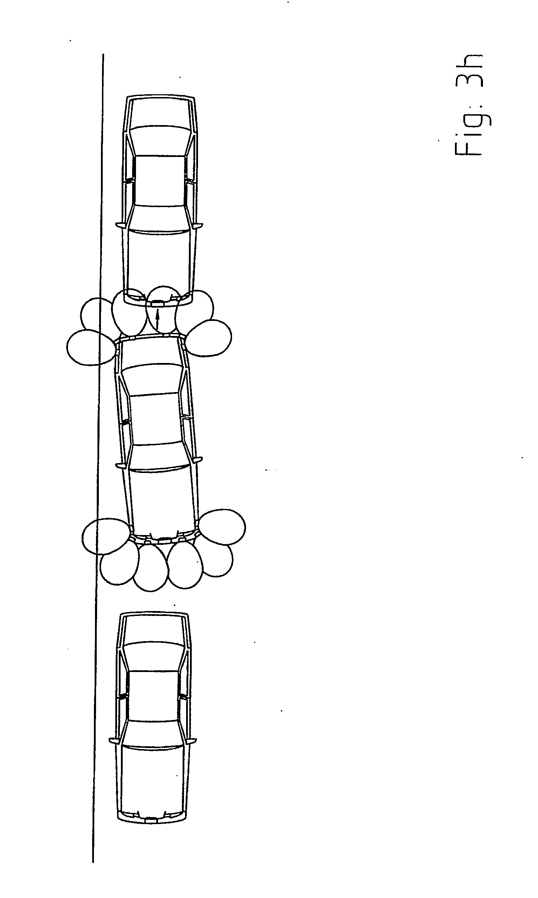

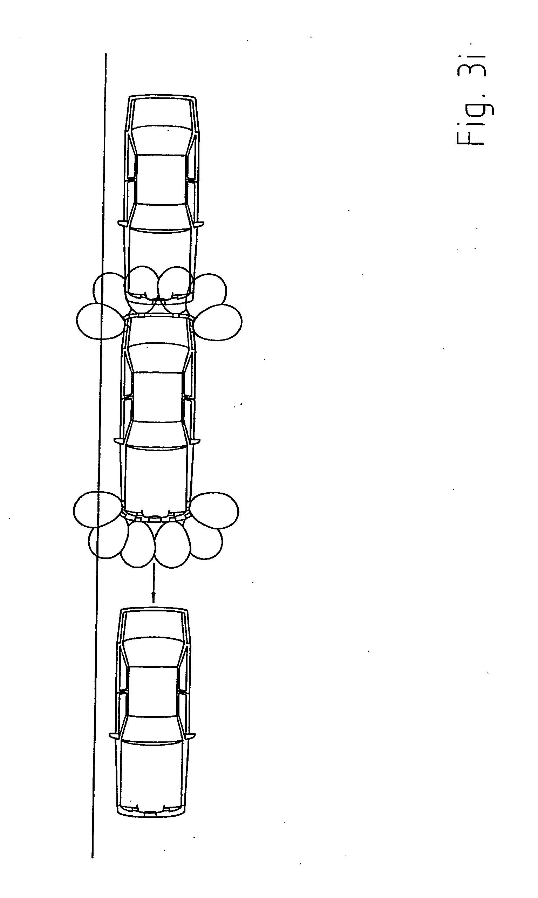

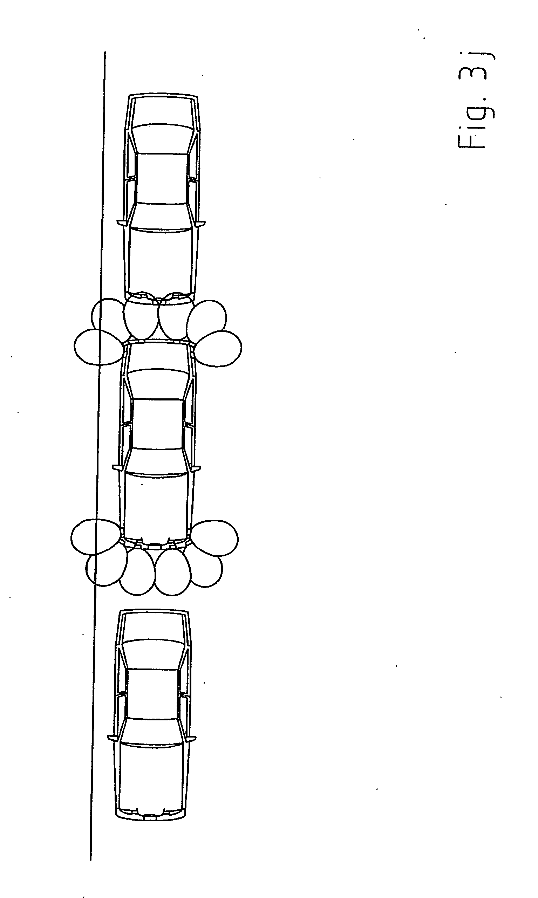

Eine Einparksituation ist in den Figuren 3a bis 3j verdeutlicht. Das Fahrzeug 30a fährt an eine Parklücke 30 zwischen zwei PKWs 32 und 33 heran und überfährt diese völlig (siehe 3a bis 3c). Dabei wird von einer entsprechenden Einrichtung mit Abstandsensoren (durch die Wirkungskeulen 31 symbolisiert) die Größe der Parklücke 30 erfasst und eine geeignete Einfahrbahn in die Parklücke 30 berechnet. Die Abstandsensoren ermitteln beim Einfahren des Fahrzeugs 30a den Abstand zu den vor und nach der Parklücke parkenden Fahrzeugen 32 und 33. Ein Lenkwinkelsensor nimmt die Stellung der Räder auf. Hieraus bestimmt eine Einrichtung die aktuelle Position des einparkenden Fahrzeugs 30a. Diese Daten werden mit der Sollposition verglichen, so dass dem Fahrer entsprechende Fahranweisungen, insbesondere zum Lenkeinschlag gegeben werden können. Zusätzlich wird der Fahrer durch die aktive Lenkung und/oder Regulierungsmittel für die Fahrzeuggeschwindigkeit (weitere Details siehe oben) auf der gewünschten Einfahrbahn bzw. im zugelassenen Einfahrbahnschlauch gehalten oder immer wieder auf diesen zurückgeführt, sofern dieser verlassen wird.

## Patentansprüche

1. Vorrichtung zur semiautonomen Unterstützung des Einparkvorgangs bei Fahrzeugen (30a) mit einer Einheit zur Ermittlung einer geeigneten Einparkbahn und mit Mitteln zur Bestimmung der aktuellen Position des Fahrzeugs sowie mit einer Kommunikationseinrichtung (12), vermittels der einem Fahrzeuglenker in Abhängigkeit von der aktuellen Position des Fahrzeugs in Bezug auf die ermittelte geeignete Einparkbahn Fahranweisungen mitteilbar sind, wobei Mittel zur Regulierung der Fahrzeuggeschwindigkeit sowie eine Steuereinheit zur Kontrolle der Regulierungsmittel vorgesehen sind, **dadurch gekennzeichnet, dass** die Steuereinheit dazu ausgelegt ist, mit Hilfe der Regulierungsmittel die Fahrzeuggeschwindigkeit zu begrenzen, herabzusetzen bzw. das Fahrzeug zu stoppen, wenn die aktuelle Position des Fahrzeugs in einem vorgegebenen Ausmaß von einer geeigneten Einparkbahn (20) abweicht, und eine erneute Geschwindigkeitserhöhung zuzulassen, wenn das Lenkrad in eine Position gebracht wird, die zur geeigneten Einparkbahn bzw. in einen vorgegebenen Wertebereich (21) um die geeignete Einparkbahn (20) zurückführt.

2. Vorrichtung nach Anspruch 1, **dadurch gekennzeichnet, dass** die Regulierungsmittel eine Einrichtung zur Betätigung der Bremsen umfassen.

3. Vorrichtung nach Anspruch 1 oder 2, **dadurch gekennzeichnet, dass** die Regulierungsmittel eine Einrichtung zur Herabsetzung der Motorleistung, z.B. zur Drosselung des Gases aufweisen.

4. Vorrichtung nach einem der Ansprüche 1 bis 3, **dadurch gekennzeichnet, dass** die Steuereinrichtung über Eingriffsmittel durch den Fahrzeuglenker überstimmbar ist.

## Claims

1. Device for providing a semi-autonomous assistance during the parking process in vehicles (30a) having a unit for determining a suitable parking path and having means for determining the current position of the vehicle, as well as having a communication device (12) by means of which driving instructions relating to the determined suitable parking path can be conveyed to a driver of a vehicle as a function of the current position of the vehicle, wherein means for regulating the speed of the vehicle and a control unit for controlling the regulating means are provided, **characterized in that** the control unit is configured to limit or reduce the speed of the vehicle using the regulating means, and to respectively stop the vehicle if the current position of the vehicle deviates from a suitable parking path (20) to a predefined degree, and to permit a renewed increase in speed if the steering wheel is placed in a position which leads back to the suitable parking path or into a predefined value range (21) around the suitable parking path (20).

2. Device according to Claim 1, **characterized in that** the regulating means comprise a device for activating the brakes.

3. Device according to Claim 1 or 2, **characterized in that** the regulating means have a device for reducing the power of the engine, for example for closing the throttle.

4. Device according to one of Claims 1 to 3,
**characterized in that** the control device can be overridden by the driver of the vehicle using engagement means.

## Revendications

1. Dispositif d'assistance semi-autonome d'une manoeuvre de stationnement d'un véhicule (30a) comportant une unité pour déterminer une trajectoire de manoeuvre de stationnement appropriée et des moyens pour déterminer la position actuelle du véhicule ainsi qu'une installation de communication (12), moyens à l'aide desquels le conducteur du véhicule reçoit des indications de conduite dépendant de la position actuelle du véhicule par rapport à la trajectoire appropriée de la manoeuvre de rangement,
des moyens étant prévus pour réguler la vitesse du véhicule ainsi qu'une unité de commande pour contrôler les moyens de régularisation,
**caractérisé en ce que**
l'unité de commande est conçue pour qu'à l'aide des moyens de régulation, elle limite, réduise la vitesse du véhicule ou arrête le véhicule si la position actuelle du véhicule diffère d'une mesure prédéfinie d'une trajectoire de manoeuvre appropriée (20), et autorise une nouvelle augmentation de la vitesse si le volant est mis dans une position qui revient à une trajectoire de manoeuvre de rangement appropriée ou dans une plage de valeurs prédéfinies (21) autour de la trajectoire de manoeuvre de rangement (20), appropriée.

2. Dispositif selon la revendication 1,
**caractérisé en ce que**
les moyens de régulation comprennent une installation pour actionner les freins.

3. Dispositif selon la revendication 1 ou 2,
**caractérisé en ce que**
les moyens de régulation comportent une installation pour réduire la puissance du moteur, par exemple pour étrangler les gaz.

4. Dispositif selon l'une des revendications 1 à 3,
**caractérisé en ce que**
l'installation de commande peut être définie de manière prioritaire par un moyen d'action exercée par le conducteur du véhicule.
